# EUROPÄISCHE PATENTSCHRIFT

(11) **EP 2 938 158 B1**
(45) Veröffentlichungstag und Bekanntmachung des Hinweises auf die Patenterteilung: **24.07.2019**
(21) Anmeldenummer: 14165910.2
(22) Anmeldetag: 24.04.2014
(51) Int. Cl.: H04W 84/10, H04W 88/04, H04W 84/00, H04W 88/06

(54) **Anordnung zur Bereitstellung von Breitband-Zugängen für ein Weitverkehrsnetz**
Assembly for providing broadband access points for a wide area network
Système destiné à la mise à disposition d'accès à large bande pour un réseau de trafic à grande distance

(43) Veröffentlichungstag der Anmeldung: 28.10.2015
(73) Patentinhaber: Deutsche Telekom AG, 53113 Bonn (DE)
(72) Erfinder: Lange, Christoph, 10318 Berlin (DE); Scheerbarth, Thomas, 12555 Berlin (DE)
(74) Vertreter: Brandt & Nern Patentanwälte

(56) Entgegenhaltungen:
- EP-A1- 1 267 583
- EP-A1- 1 601 136
- US-A1- 2005 254 442
- US-A1- 2012 213 205
- SANFORD J R ET AL: "Facade integrated microstrip patch antennas applied to personal communication networks", UNIVERSAL PERSONAL COMMUNICATIONS, 1992. ICUPC '92 PROCEEDINGS., 1ST I NTERNATIONAL CONFERENCE ON DALLAS, TX, USA 29 SEPT.-1 OCT. 1992, NEW YORK, NY, USA,IEEE, US, 29. September 1992 (1992-09-29), Seiten 8.05/1-08.05/5, XP010060982, ISBN: 978-0-7803-0591-5
- TO-SHIE T ET AL: "Wireless IP Access System (WIPAS) -Broadband Access System by fiber + radio", PERSONAL, INDOOR AND MOBILE RADIO COMMUNICATIONS, 2006 IEEE 17TH INTER NATIONAL SYMPOSIUM ON, IEEE, PI, 11. September 2006 (2006-09-11), Seiten 1-5, XP031462098, ISBN: 978-1-4244-0329-5

## Beschreibung

Die Erfindung betrifft eine Anordnung zur Bereitstellung von breitbandigen Zugängen für ein Weitverkehrsnetz, wie insbesondere das Internet. Sie bezieht sich dabei auf die Bereitstellung von Zugängen zu einem Weitverkehrsnetz, dessen Kernnetz selbstverständlich ebenfalls breitbandig beziehungsweise in Form eines Hochgeschwindigkeitsnetzes ausgebildet ist. Die nachfolgenden Darstellungen beziehen sich im Allgemeinen auf die Bereitstellung von breitbandigen Zugängen zum Internet, wobei jedoch die Erfindung entsprechend ihrem Titel und dem beanspruchten Schutzgegenstand nicht auf das Internet begrenzt ist, sondern sich vielmehr allgemein mit der Bereitstellung breitbandiger Zugänge für ein Weitverkehrsnetz befasst. Nur aus Gründen der Vereinfachung soll nachfolgend im Allgemeinen lediglich auf das Internet Bezug genommen werden.

Der Ausbau des Breitbandzugangsnetzes zum Internet ist eine anerkannt wichtige wirtschaftspolitische Aufgabe. Soweit breitbandige, also hohe Übertragungsraten bereitstellende Netze beziehungsweise Netzwerke leitungsgebunden ausgebildet sind, wird dies gegenwärtig insbesondere durch die Verwendung von Glasfaserkabeln realisiert. Gleiches gilt für entsprechend breitbandige Zugangsnetze zu solchen Netzen.

Als breitbandig sollen im Kontext der dargestellten Erfindung Zugänge beziehungsweise Netze angesehen werden, welche entsprechend der dazu von der ITU (internationale Fernmeldeunion) gegebenen Definition eine Datenübertragungsrate von 2048 kBit/s oder mehr ermöglichen. Derartige Übertragungsraten sind beispielsweise über größere Distanzen, das heißt mehrere Kilometer hinweg mittels Kupferdoppeladern nicht erreichbar, da mit größer werdender Distanz die Dämpfung des übertragenen Nutzsignals deutlich steigt.

Jedoch ist der flächendeckende Ausbau eines solchen Glasfasernetzes beziehungsweise Glasfaserzugangsnetzes bis in jede Wohnung beziehungsweise bis hin zu jedem Teilnehmeranschluss - auch als FTTH, Fibre To The Home, bezeichnet - enorm kostenintensiv. Daher gibt es im Zusammenhang mit der Internetversorgung in Deutschland, aber auch in anderen Ländern, verschiedene Ausbaustufen für das Zugangsnetz, die ausgehend von der vollständigen Nutzung der vom Telefonnetz bekannten Kupferdoppelader von der Vermittlungsstelle aus bis in jede Wohnung für die Auslieferung von Breitbanddiensten Zwischenstufen vorsehen.

Bei einem als FTTCab (Fibre To The Cabinet) bezeichneten Ansatz wird eine Glasfaser im Hauptkabelabschnitt bis zu einem Multifunktionsgehäuse am Straßenrand - typischerweise am Standort des Kabelverzweigers (KVz) - verlegt und ein Breitbandsignal lediglich in dem kurzen Abschnitt zwischen diesem als Cabinet bezeichneten Multifunktionsgehäuse und den einzelnen Teilnehmeranschlüssen über eine vergleichsweise kurze Kupferdoppelader übertragen. Demgegenüber etwas weiter geht noch der FTTB-Ansatz (Fibre To The Building), bei dem eine Glasfaser bis hinein in jedes Haus verlegt wird und dann nur noch innerhalb des Hauses die Verteilung zu den Anschlüssen über Kupferdoppeladern erfolgt.

Die erzielbaren Zugangsbitraten, also die erzielbaren Übertragungsraten im Zugangsnetz, steigen dabei, je weiter Glasfaserkabel in Richtung eines jeweiligen Teilnehmeranschlusses herangeführt werden. Wie bereits ausgeführt, sind jedoch die hiermit verbundenen Kosten sehr hoch. Dies ist insbesondere bedingt durch die notwendigen Erdarbeiten, um Glasfaserkabel bis zu einem Multifunktionsgehäuse am Straßenrand (Cabinet) oder gegebenenfalls sogar bis zu den einzelnen Gebäuden heranzuführen. Aber auch die Installation innerhalb von Gebäuden ist mit einem nicht unbeträchtlichen Kostenaufwand verbunden, wobei insbesondere Letzteres nicht nur für die Verwendung von Glasfaserkabeln, sondern auch bezüglich der Installation entsprechender Kupferadern gilt.

Daher ist, einhergehend mit dem Ausbau der Mobilfunknetze, in jüngerer Zeit auch die Überlegung in Betracht gezogen worden, ortsfeste Teilnehmeranschlüsse unter Nutzung der Funktechnik an das Internet anzubinden. Allerdings bedingt diese Art des Anschlusses an das Internet geringere (garantierte) Bitraten beziehungsweise Übertragungsraten je Teilnehmeranschluss als insbesondere ein leitungsgebundener Anschluss. Die insoweit bestehenden Einschränkungen resultieren aus den speziellen Eigenschaften der Funkkanäle und der Funknetze, insbesondere von Netzen mit einem zellularen Aufbau.

Dennoch bietet die Einbeziehung der Funktechnik Möglichkeiten zur Reduzierung der Kosten bei der Breitbandversorgung von Teilnehmeranschlüssen. In diesem Zusammenhang sind Lösungen bekannt geworden, welche gewissermaßen als Hybridlösungen bezeichnet werden können. Dabei werden die Breitbandsignale im Zugangsnetz abschnittsweise über unterschiedliche Kanäle, nämlich in einem unmittelbar mit dem Weitverkehrsnetz beziehungsweise dem Kernnetz verbundenen ersten Abschnitt leitungsgebunden, vorzugsweise über Glasfaserkabel, und in einem anderen Abschnitt, dem letzten Übertragungsabschnitt zum Teilnehmer, über Funk übertragen.

Eine entsprechende Lösung ist beispielsweise in Japan unter WIPAS (Wireless IP Access System) bekannt geworden und bereits im Einsatz. Diese Lösung wird unter http://pdf.aminer.org/000/337/127/application_area_expansion_in_quasi_ millimeter_wave_band_fixed_wireless.pdf beschrieben. Demgemäß wird zur Ausbildung eines Zugangsnetzes für das Internet ein Glasfaserkabel bis zu einer Art Kopfstation geführt. Bei dieser als Zugangspunkt (Access Point) definierten Kopfstation handelt es sich um eine vorzugsweise zentral lokalisierte Umsetzungs- und Funkübertragungseinrichtung. Diese ist vorzugsweise in Form eines hohen Antennenmastes ausgebildet, an welchem neben der Antenne der schon genannte Umsetzer sowie Sende- und Empfangseinheiten zur Funkübertragung angeordnet sind. Durch den Umsetzer werden aus der Richtung des Weitverkehrsnetzes leitungsgebunden eintreffende Signale mit Daten in Funksignale umgesetzt und vermittels der vorgenannten Funksende- und Funkempfangseinheiten sowie der Antenne abgestrahlt. Teilnehmerseitig ist eine Antenne zum Empfang der von dem Access Point übertragenen Funksignale angeordnet, wobei eine entsprechende Antenne für jeden einzelnen Teilnehmer oder eine kleinere Gruppe von Teilnehmern vorgesehen ist. Zur teilnehmerseitigen Antenne gehören ferner mindestens eine Sende- und Empfangseinheit zur Funküberragung und eine Terminaleinheit (Wireless Terminal - WT), welche die empfangenen Funksignale wieder in leitungsgebunden weiterzuführende Signale umsetzt. Die letztgenannten, leitungsgebunden übertragenen Signale werden schließlich über eine entsprechende Teilnehmerleitung, wie beispielsweise ein Ethernetkabel, zu dem jeweils für ihren Empfang bestimmten Teilnehmer, das heißt zu einem von diesem verwendeten Endgerät weitergeleitet. Dabei ist für jedes mit dem beschriebenen System zu benutzende Endgerät oder lokale Netzwerk eines Teilnehmers eine spezielle, als WT-Adapter bezeichnete Schnittstelleneinrichtung als zusätzliches Gerät anzuordnen. Vom jeweiligen Teilnehmer ausgehende Signale nehmen entsprechend den umgekehrten Weg, wobei sie zunächst über die Teilnehmeranschlussleitung zur teilnehmerseitigen Antenne mit zugehörigem Umsetzer und Funksende- und Funkempfangseinheit übertragen, von hier per Funk an den Access Point übermittelt und schließlich nach erneuter Umsetzung über das Glasfaserkabel am Access Point zum Weitverkehrsnetz weitergeleitet werden.

Ein Nachteil der zuvor beschriebenen Lösung ist es, dass teilnehmerseitig je Teilnehmer neben einem Umsetzer und mindestens einer Funksende- und Funkempfangseinheit jeweils eine an der Gebäudefassade anzuordnende Antenne vorzusehen ist. Beispielsweise bei einem Mehrfamilienhaus mit einer Mehrzahl von mittels dieser Technik mit einem Internetanschluss versorgter Teilnehmer wirkt es sich aber hinsichtlich der Optik sehr nachteilig aus, wenn hierfür an der Häuserfront eine Mehrzahl von Antennen anzuordnen ist. Zudem weist die als WIPAS bekannt gewordene Lösung weiterhin den Nachteil auf, dass in den Räumlichkeiten eines Teilnehmers spezielle Gerätetechnik in Form des schon genannten WT-Adapters vorzusehen ist, welcher seinerseits Platz benötigt und gegebenenfalls, ebenso wie die Antenne, an der Außenfassade des Gebäudes als optisch störend empfunden wird.

Aus der US 2012/0213205 A1 ist darüber hinaus ein System zur Bereitstellung eines Mehrwegezugangs zu einem Breitbandnetz für die paketvermittelte Datenübertragung, nämlich insbesondere zu einem Mobilfunknetz, bekannt. Gemäß der in der Schrift vorgestellten Lösung werden die Mobilfunksignale teilnehmerseitig über eine Außenantenne empfangen beziehungsweise abgestrahlt, wobei mittels einer mit dieser Außenantenne verbundenen Funkeinheit im Innern eines Gebäudes oder eines Fahrzeugs eine Umsetzung zwischen den Mobilfunksignalen und unterschiedlichen im Innenraum verwendeten Funksignalen geringer Reichweite, wie Bluetooth und WLAN, erfolgt. Das beschriebene System dient dabei insbesondere der Verbesserung des Mobilfunkempfangs in Innenräumen sowie der Nutzung des Mobilfunks mit unterschiedlichen, selbst nicht mobilfunkfähigen Endgeräten.

Aufgabe der vorliegenden Erfindung ist es, die vorstehend aufgeführten Nachteile zu vermeiden. Hierzu ist eine Anordnung anzugeben, welche es ermöglicht, preiswert und effizient breitbandige Zugänge zu einem Weitverkehrsnetz bereitzustellen, ohne dabei insbesondere aus optischen Gesichtspunkten als störend empfunden zu werden.

Die Aufgabe wird durch eine Anordnung mit den Merkmalen des Patentanspruchs 1 gelöst. Vorteilhafte Aus- beziehungsweise Weiterbildungen der Erfindung sind durch die Unteransprüche gegeben.

Auch die zur Lösung der Aufgabe vorgeschlagene Anordnung geht von einem hybriden Ansatz aus. Dabei besteht die Anordnung aus mindestens einem ortsfesten, direkt an das Weitverkehrsnetz angebundenen Netzzugangspunkt und teilnehmerseitiger, mit einem ortsfesten Netzzugangspunkt über Funk verbindbarer Zugangstechnik. Der mindestens eine ortsfeste Netzzugangspunkt ist an das Weitverkehrsnetz leitungsgebunden, vorzugsweise mittels Glasfaserkabel, breitbandig angebunden. Die je Teilnehmeranschluss vorzusehende teilnehmerseitige Zugangstechnik, welche zur Nutzung des Weitverkehrsnetzes mittels mindestens eines computerbasierten Endgeräts über Funk mit einem ortsfesten Netzzugangspunkt verbindbar ist, besteht mindestens aus einer Antenne mit Sende- und Empfangseinheiten für die funkbasierte Kommunikation mit einem ortsfesten Netzzugangspunkt, einer Routereinrichtung in Form eines Breitbandrouters und mindestens einer Schnittstelle zur funk- und/oder leitungsbasierten Verbindung mindestens des vorgenannten computerbasierten Endgeräts mit der Routereinrichtung.

Hierbei ist dem Fachmann klar, dass über die letztgenannte Schnittstelle gegebenenfalls nicht nur ein computerbasiertes Endgerät zur Nutzung des Weitverkehrsnetzes mit der Routereinrichtung verbindbar ist, sondern diese Schnittstelle selbstverständlich auch zur Verbindung eines lokalen Netzwerks mit mehreren computerbasierten Endgeräten für die Nutzung des Weitverkehrsnetzes mit der Routereinrichtung dienen kann.

Die zur Lösung der Aufgabe vorgestellte Anordnung ist derart ausgestaltet, dass die vorstehend näher charakterisierte teilnehmerseitige Zugangstechnik in die Hülle eines stationären Objekts (beispielsweise eines Gebäudes) oder eines mobilen Objekts (beispielsweise eines Fahrzeugs) einbezogen ist. Hierbei ist die mindestens eine Antenne der betreffenden teilnehmerseitigen Zugangstechnik, welche für die funkbasierte Kommunikation mit einem ortsfesten Netzzugangspunkt vorgesehen ist, unmittelbar an oder innerhalb eines Bestandteils der Hülle des Objekts angeordnet. Gleichzeitig sind die an dieser Antenne betriebenen Sende- und Empfangseinheiten zur funkgestützten Kommunikation mit einem ortsfesten Netzzugangspunkt sowie die Routereinrichtung erfindungsgemäß in einen Bestandteil der Hülle des Objekts integriert. Anders als bei dem eingangs beschriebenen Konzept WIPAS, nach welchem innerhalb eines Gebäudes teilnehmerseitig ein so genannter WT-Adapter vorgesehen ist und ein gegebenenfalls benötigter, die Nutzung des Teilnehmeranschlusses beziehungsweise der Teilnehmerzugangstechnik mittels mehrerer Endgeräte ermöglichender Router als zusätzliches Gerät beizustellen ist, bilden die insoweit vergleichbaren Komponenten der erfindungsgemäßen Anordnung vorzugsweise eine einzige Baueinheit aus, sind aber jedenfalls gemeinsam als integraler Bestandteil der Objekthülle angeordnet.

Bei den vorgenannten, die teilnehmerseitige Zugangstechnik in ihre Hülle einbeziehenden ortfesten Objekten kann es um unterschiedlichste Bauwerke oder Gebäude handeln, wie insbesondere um Wohnhäuser in Form von Ein- oder Mehrfamilienhäusern, um reine Bürogebäude oder Fabrikgebäude aber selbstverständlich auch um öffentliche Gebäude, nämlich beispielsweise Bahnhöfe, Flughafengebäude, Krankenhäuser, Schulen oder Rathäuser.

Das Merkmal der vorgestellten Anordnung, wonach die zur teilnehmerseitigen Zugangstechnik gehörende Antenne für die funkbasierte Kommunikation mit einem ortsfesten Netzzugangspunkt unmittelbar an einem Bestandteil der Hülle eine Objektes angeordnet ist meint, dass die Antenne nicht (jedenfalls nicht visuell unmittelbar für einen Betrachter wahrnehmbar oder von ihm als störend empfunden) von der Hülle des Objekts, wie der Fassade oder dazu gehöriger Elemente eines Gebäudes aufragt. Die Antenne liegt hierbei flächig an einer Außenfläche eines Bestandteils der Objekthülle an oder ist auf eine solche Außenfläche aufgebracht. Im Hinblick auf die im Allgemeinen flache, sich im Wesentlichen in zwei Dimensionen erstreckende Ausbildung entsprechender Antennen kommt in Bezug auf Letzteres insbesondere ein Aufdampfen auf den betreffenden Bestandteil der Objekthülle oder eine in sonstiger Weise erfolgende Beschichtung mit der Antenne beziehungsweise mit dem Antennenelement ebenso in Betracht wie ein Aufkleben.

Erfindungsgemäß sind die Sende- und Empfangseinheiten zur Funkübertragung sowie die Routereinrichtung der teilnehmerseitigen Zugangstechnik in den Rahmen eines Fensters eines stationären oder mobilen Objekts integriert. Entsprechend einer möglichen Alternative ist dabei neben den Sende- und Empfangseinheiten zur Funkübertragung sowie der Routereinrichtung auch die Antenne für den funkgestützten Datenaustausch mit einem ortsfesten Netzzugangspunkt in den Fensterrahmen integriert. Die Möglichkeit einer Anordnung der Antenne im Fensterrahmen kommt jedoch nur bei Fenstern mit einem aus einem nichtleitenden Material bestehenden Fensterrahmen in Betracht. Denkbar ist es darüber hinaus, dass die Antenne bei demselben, die Sende- und Empfangseinheiten zur Funkübertragung sowie die Routereinrichtung in seinem Rahmen aufnehmenden Fenster oder bei einem anderen Fenster des Objekts auf die Außenfläche einer Fensterscheibe aufgebracht oder innerhalb der Fensterscheibe eines mit Mehrfachverglasung ausgebildeten Fensters angeordnet ist.

Demnach ist das mit der teilnehmerseitigen Zugangstechnik ausgestattete Fenster der im Patentanspruch 1 genannte Bestandteil der Hülle eines Objekts. Bei dem Objekt selbst kann es sich sowohl um ein Gebäude, also um ein stationäres Objekt, als auch um ein Fahrzeug, wie ein Automobil, eine Triebeinheit oder einen Waggon eines Schienenfahrzeugs oder ein Schiff, als insoweit mobiles Objekt handeln. Nach diesem Verständnis ist die Hülle eines Objekts kein homogenes Gebilde, sondern wird gegebenenfalls durch eine größere Anzahl einen Verbund zur Einfassung des betreffenden Objekts darstellender Bestandteile gebildet. Im Falle eines Gebäudes stellt ein Fenster mit Fensterscheibe und Rahmen einen solchen Bestandteil der Gebäudehülle dar.

Während WIPAS ausschließlich auf Homeanwendungen beziehungsweise auf so genannte und SOHO-Anwendungen (Small Office and Home) abzielt eignet sich die vorgestellte Lösung auch für die Verwendung mit mobilen Objekten und somit für den Einsatz auf dem Transportsektor, das heißt für die Breitband-Anbindung von Landfahrzeugen, Schienenfahrzeugen und (in der Binnenschifffahrt eingesetzten) Schiffen.

Soweit demnach die vorgestellte Anordnung auch Ausbildungsformen umfasst, bei denen die teilnehmerseitige Zugangstechnik für die Nutzung des Weitverkehrsnetzes in die Hülle eines mobilen Objekts einbezogen ist, verfügt eine solche Anordnung nicht nur über einen ortsfesten Netzzugangspunkt. Vielmehr umfasst die Anordnung in einem solchen Fall eine Mehrzahl, jeweils leitungsgebunden breitbandig an das Weitverkehrsnetz angebundener ortsfester Netzzugangspunkte, welche hierbei unmittelbar entlang oder jedenfalls in der Nähe (in Funkreichweite) von Bewegungskorridoren (in Bezug auf Landfahrzeuge im Bereich von Straßen) für mobile Objekte angeordnet sind, die ihrerseits mit teilnehmerseitiger Zugangstechnik entsprechend der Erfindung ausgestattet sind. Hierbei wird ein entsprechendes, sich in einem solchen Korridor bewegendes mobiles Objekt durch die, entlang beziehungsweise in der Nähe des Korridors angeordneten Netzzugangspunkte während seiner Bewegung nach dem Prinzip des Handover gewissermaßen jeweils von einem Netzzugangspunkt zum nächsten übergeben.

Im Falle einer Implementierung der Anordnung im landgebundenen Straßenverkehr mit teilnehmerseitiger, in die Hülle von Pkw, Lkw, Bussen, Straßenbahnen oder vergleichbaren Landfahrzeugen einbezogener Zugangstechnik und mit entlang beziehungsweise an Straßen und/oder Schienentrassen angeordneten Netzzugangspunkten (Access Points) können die Elemente der betreffenden Netzzugangspunkte an Infrastrukturelementen, wie beispielsweise Laternenmasten, Masten von Verkehrsschildern oder Schilderbrücken, angeordnet sein. Selbstverständlich kommt aber eine Anordnung der Elemente von Netzzugangspunkten an Infrastrukturelementen der vorgenannten Art auch für solche Netzzugangspunkte in Betracht kommt, welche mit in die Hülle ortsfester Objekte einbezogener teilnehmerseitiger Zugangstechnik interagieren.

Bei der schon mehrfach erwähnten Schnittstelle der teilnehmerseitigen Zugangstechnik, über welche ein computerbasiertes Endgerät oder ein lokales Netzwerk mit mehreren Endgeräten zur Nutzung des Weitverkehrsnetzes mit der zur teilnehmerseitigen Zugangstechnik gehörenden Routereinrichtung verbindbar ist, kann es sich beispielsweise um einen oder mehrere Ethernetports oder um mindestens eine Koaxialbuchse für die Fernsehversorgung oder um einen optischen Port zur leitungsgebundenen Verbindung mit der Routereinrichtung und/oder um funkbasierte Sende- und Empfangsmittel sowie eine Antenne zur Bereitstellung eines WLAN handeln.

Anhand von Zeichnungen sollen nachfolgend weitere Erläuterungen zur Erfindung gegeben sowie Ausführungsbeispiele dargestellt werden. Hierbei zeigen:
- Fig. 1:: den grundsätzlichen Aufbau der vorgeschlagenen Anordnung in schematischer Darstellung,
- Fig. 2:: ein Ausführungsbeispiel mit in die Hülle beziehungsweise Fassade eines Mehrfamilienhauses einbezogener teilnehmerseitiger Zugangstechnik,
- Fig. 3:: eine mögliche Ausbildungsform mit Bezug auf in einem mobilen Objekt angeordnete teilnehmerseitige Zugangstechnik.

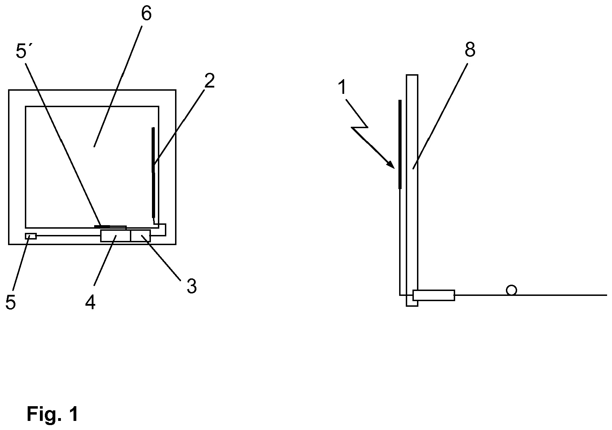

Die Fig. 1 zeigt den grundsätzlichen Aufbau der vorgeschlagenen Anordnung in einer schematischen Darstellung. Die Anordnung wird gebildet durch (mindestens) einen Netzzugangspunkt 1 und die über Funk mit diesem Netzzugangspunkt verbindbare teilnehmerseitige Zugangstechnik. Hierbei besteht der Netzzugangspunkt 1 aus einer Antenne für die funkgestützte Kommunikation mit teilnehmerseitiger Zugangstechnik eines beziehungsweise vorzugsweise mehrerer Teilnehmer, welche beispielsweise an einem Infrastrukturelement, wie einer Straßenlaterne 8, angeordnet ist, aus einem Umsetzer und mindestens einer/einem den Netzzugangspunkt mit dem nicht gezeigten Weitverkehrsnetz beziehungsweise Kernnetz breitbandig verbindenden Leitung/Kabel. Im Hinblick auf die geforderte Breitbandigkeit handelt es sich bei Letzterem vorzugsweise um ein Glasfaserkabel. Der zum Netzzugangspunkt 1 gehörende Umsetzer dient der Umsetzung von in Richtung eines Teilnehmers übertragenen Breitbandsignalen von der Leitung, respektive dem Glasfaserkabel, auf den über die Antenne aufgebauten Funkkanal und in umgekehrter Richtung der Umsetzung über Funk an der Antenne eingehender Breitbandsignale von Teilnehmern auf das Glasfaserkabel.

Gemäß dem dargestellten, insoweit im Grunde auch bereits als Ausführungsbeispiel anzusehenden Schema ist die teilnehmerseitige Zugangstechnik an beziehungsweise in einem Fenster angeordnet. Es handelt sich hierbei um die beispielsweise an der Außenseite einer Fensterscheibe angeordnete Antenne 2 zur funkbasierten Kommunikation mit dem ortsfesten Netzzugangspunkt 1, um eine in den Fensterrahmen integrierte Routereinrichtung 4 nebst mit der Antenne 2 zu betreibenden Sende- und Empfangseinheiten 3 für die Funkübertragung und um eine Schnittstelle 5, 5' zur Kopplung eines (nicht gezeigten) computerbasierten Endgeräts oder eines teilnehmerseitigen lokalen Netzwerks mit der Routereinrichtung 4. In dem gezeigten Schema ist die letztgenannte Schnittstelle 5, 5' dual ausgebildet. Sie umfasst eine Anschlussbuchse 5, wie beispielsweise einen Gigabit-Ethernetport und Mittel 5' zur Bereitstellung eines WLAN, mit entsprechenden (hier nicht gezeigten) Sende- und Empfangsmitteln und einer in ein mit dem dargestellten Fenster ausgestattetes Gebäude hinein abstrahlenden WLAN-Antenne.

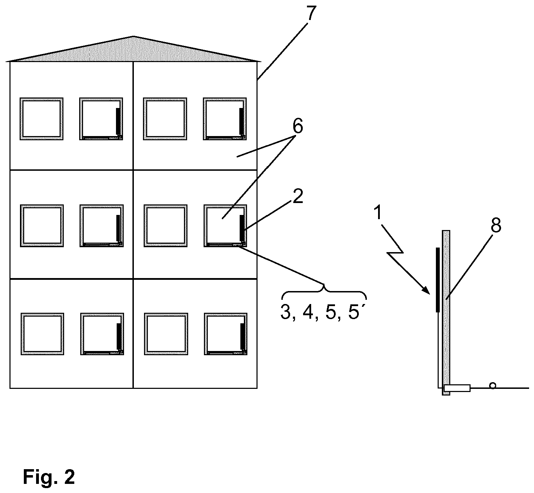

Die Fig. 2 zeigt ein mögliches Ausführungsbeispiel der erfindungsgemäßen Anordnung, bei welchem die teilnehmerseitige Zugangstechnik mehrerer das Internet (Weitverkehrsnetz) nutzender Teilnehmer entsprechend der Erfindung an einem stationären Objekt 7 angeordnet und ausgebildet ist. Demgemäß ist die Zugangstechnik eines jeweiligen Teilnehmers, welche dem betreffenden Teilnehmer die Nutzung des Internets mittels mindestens eines computerbasierten Endgeräts ermöglicht, in das Fenster seiner Wohnung oder seines Büros als Bestandteil der Hülle 6 des Gebäudes beziehungsweise ortsfesten Objekts 7 integriert. Die Antenne 2 zur funkgestützten Kommunikation mit dem Netzzugangspunkt 1 ist an der Fensterscheibe oder innerhalb einer Mehrfachverglasung des Fensters angeordnet. Die weiteren, hier in dieser Darstellung nicht gezeigten Bestandteile der teilnehmerseitigen Zugangstechnik sind, wie in der Fig. 1 gezeigt oder ähnlich, in den Fensterrahmen des Fensters integriert. Der in relativer Nähe zu dem Mehrfamilienhaus, das heißt zumindest in Funkreichweite, angeordnete Netzzugangspunkt 1 (Access Point) entspricht dem in der Fig. 1 gezeigten und ist vorzugsweise über ein Glasfaserkabel an das Internet angebunden.

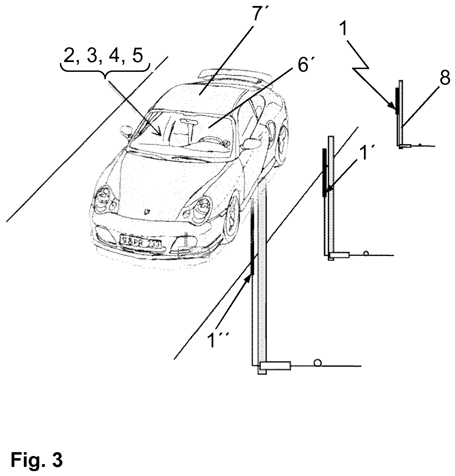

Die Fig. 3 zeigt eine Ausbildungsform der Anordnung, bei welcher die teilnehmerseitige Zugangstechnik in die Hülle 6' eines mobilen Objekts 7', nämlich im Beispiel in die Karosserie eines Kraftfahrzeugs, einbezogen ist. Auch hierbei ist die Antenne 2 zur Kommunikation mit dem beziehungsweise den Netzzugangspunkten 1, 1', 1" an einer Fensterscheibe, nämlich der Frontscheibe des Fahrzeugs oder innerhalb des Verbunds einer Sicherheitsverglasung angeordnet, wobei die weiteren Einheiten der teilnehmerseitigen Zugangstechnik - die an der Antenne 2 zur funkbasierten Kommunikation mit einem ortsfesten Netzzugangspunkt betriebenen Sende- und Empfangseinheiten 3 sowie die Routereinrichtung 4 mit Schnittstelle(n) 5 für computerbasierte Endgeräte - in die Einfassung der die Antenne 2 aufnehmenden Frontscheibe integriert sind. Da es sich bei dem die teilnehmerseitige Zugangstechnik aufnehmenden Objekt 7' in dem dargestellten Beispiel um ein mobiles Objekt handelt, sind entlang des möglichen Bewegungskorridors - hier der Straße für das Kraftfahrzeug - mehrere gemäß der Fig. 1 ausgebildete Netzzugangspunkte 1, 1', 1" angeordnet, welche die teilnehmerseitige Zugangstechnik während der Bewegung des Fahrzeugs in einem Handover-Verfahren aneinander übergeben.

Mit dem Ausführungsbeispiel gemäß der Fig. 3 vergleichbare Ausbildungsformen beziehen sich auf die Einbeziehung teilnehmerseitiger Zugangstechnik in die Hülle von Schienenfahrzeugen oder Schiffen, wobei Letzteres insbesondere im Hinblick auf die Binnenschifffahrt praxisrelevant ist. Hierbei sind dann die Netzzugangspunkte 1, 1', 1" mit der direkten breitbandigen Kopplung an das Weitverkehrsnetz entlang einer Schienentrasse beziehungsweise entlang eines Fluss- oder Kanalufers angeordnet. Die Einbeziehung der teilnehmerseitigen Zugangstechnik geschieht auch hierbei vorzugsweise durch Integration in entsprechende Fenster der Fahrzeuge, wie beispielsweise in ein Fenster der Kommandobrücke eines Schiffes.

## Patentansprüche

1. Anordnung zur Bereitstellung von breitbandigen Zugängen für ein Weitverkehrsnetz, bestehend aus mindestens einem ortsfesten, leitungsgebunden direkt breitbandig an das Weitverkehrsnetz angebundenen Netzzugangspunkt (1, 1', 1") und teilnehmerseitiger Zugangstechnik für die Nutzung des Weitverkehrsnetzes mittels mindestens eines computerbasierten Endgerätes, wobei die teilnehmerseitige Zugangstechnik mindestens eine Antenne (2) mit Sende- und Empfangseinheiten (3) für die funkbasierte Kommunikation mit einem ortsfesten Netzzugangspunkt (1, 1', 1"), eine Routereinrichtung (4) und wenigstens eine Schnittstelle (5,5') zur funk- und/oder leitungsbasierten Verbindung mindestens des genannten computerbasierten Endgeräts mit der Routereinrichtung (4) umfasst und in die Hülle (6, 6') eines stationären Objekts (7) oder eines mobilen Objekts (7') einbezogen ist und wobei die Sende- und Empfangseinheiten (3) sowie die Routereinrichtung (4) der teilnehmerseitigen Zugangstechnik in den Rahmen eines Fensters des Objekts (7, 7') integriert sind und wobei ferner die Antenne (2) für die funkbasierte Kommunikation mit einem ortfesten Netzzugangspunkt (1, 1', 1")
a.) in den, in diesem Fall aus einem nichtleitenden Material bestehenden Rahmen dieses Fensters integriert ist
oder
b.) auf die Außenfläche einer Fensterscheibe dieses oder eines anderen Fensters des Objekts (7, 7') aufgebracht ist
oder
c.) innerhalb der Fensterscheibe dieses mit einer Mehrfachverglasung ausgebildeten oder eines anderen mit einer Mehrfachverglasung ausgebildeten Fensters des Objekts (7, 7') angeordnet ist.

2. Anordnung nach Anspruch 1, **dadurch gekennzeichnet, dass** die teilnehmerseitige Zugangstechnik in die Hülle (6') eines mobilen Objekts (7') einbezogen ist und entlang eines Bewegungskorridors des mobilen Objekts (7') mehrere ortsfeste, leitungsgebunden direkt an das Weitverkehrsnetz angebundene Netzzugangspunkte (1, 1', 1") angeordnet sind, wobei die teilnehmerseitige Zugangstechnik während der Nutzung des Weitverkehrsnetzes mittels des mindestens einen computerbasierten Endgeräts bei der Bewegung des mobilen Objekts (7') in dem Bewegungskorridor nach dem Prinzip des Handover jeweils von einem Netzzugangspunkt (1, 1', 1") zum nächsten übergeben wird.

3. Anordnung nach Anspruch 2, **dadurch gekennzeichnet, dass** die ortsfesten Netzzugangspunkte (1, 1', 1") entlang von Straßen an Straßenlaternen (8), Masten von Verkehrsschildern und/oder an Schilderbrücken ausgebildet sind.

4. Anordnung nach Anspruch 2, **dadurch gekennzeichnet, dass** die ortsfesten Netzzugangspunkte (1, 1', 1") entlang von Schienentrassen für Schienenfahrzeuge angeordnet sind.

5. Anordnung nach Anspruch 2, **dadurch gekennzeichnet, dass** die ortsfesten Netzzugangspunkte (1, 1', 1") entlang des Ufers eines für die Binnenschifffahrt genutzten Flusses oder Kanals angeordnet sind.

6. Anordnung nach einem der Ansprüche 1 bis 5, **dadurch gekennzeichnet, dass** die als Bestandteil der teilnehmerseitigen Zugangstechnik ausgebildete Schnittstelle (5, 5') zur Verbindung des mindestens einen computerbasierten Endgeräts mit der Routereinrichtung (4) wenigstens einen LAN-Port umfasst.

7. Anordnung nach einem der Ansprüche 1 bis 6, **dadurch gekennzeichnet, dass** die als Bestandteil der teilnehmerseitigen Zugangstechnik ausgebildete Schnittstelle (5, 5') zur Verbindung des mindestens einen computerbasierten Endgeräts mit der Routereinrichtung (4) wenigstens eine Buchse zum Anschluss eines Koaxialkabels umfasst.

8. Anordnung nach einem der Ansprüche 1 bis 7, **dadurch gekennzeichnet, dass** die als Bestandteil der teilnehmerseitigen Zugangstechnik ausgebildete Schnittstelle (5, 5') zur Verbindung des mindestens einen computerbasierten Endgeräts eine in das mit der teilnehmerseitigen Zugangstechnik ausgestattete stationäre oder mobile Objekt (7, 7') hinein abstrahlende Antenne sowie Funksende- und Funkempfangsmittel zur Ausbildung eines WLAN umfasst.

## Claims

1. Arrangement for providing broadband accesses for a wide area network, consisting of at least one fixed network access point (1, 1', 1'') interfaced to the wide area network directly in wired fashion on a broadband basis and subscriber-end access technology for using the wide area network by means of at least one computer-based terminal, wherein the subscriber-end access technology comprises at least one antenna (2) having transmission and reception units (3) for the radio-based communication with a fixed network access point (1, 1', 1''), a router device (4) and at least one interface (5, 5') for radio-based and/or wire-based connection of at least the cited computer-based terminal to the router device (4) and is incorporated in the casing (6, 6') of a stationary object (7) or of a mobile object (7'), and wherein the transmission and reception units (3) and also the router device (4) of the subscriber-end access technology are integrated in the frame of a window of the object (7, 7'), and wherein, further, the antenna (2) for the radio-based communication with a fixed network access point (1, 1', 1")
a.) is integrated in the frame of this window, which frame is made of a nonconductive material in this case,
or
b.) is applied to the exterior surface of a windowpane of this or of another window of the object (7, 7'),
or
c.) is arranged inside the windowpane of this window, which is designed to have multiple glazing, or of another window, which is designed to have multiple glazing, of the object (7, 7').

2. Arrangement according to Claim 1, **characterized in that** the subscriber-end access technology is incorporated in the casing (6') of a mobile object (7'), and multiple fixed network access points (1, 1', 1") interfaced to the wide area network directly in wired fashion are arranged along a corridor of movement of the mobile object (7'), wherein the subscriber-end access technology is handed over in each case from one network access point (1, 1', 1") to the next according to the handover principle during use of the wide area network by means of the at least one computer-based terminal when the mobile object (7') moves in the corridor of movement.

3. Arrangement according to Claim 2, **characterized in that** the fixed network access points (1, 1', 1") are formed along roads on streetlamps (8), masts of road signs and/or on sign gantries.

4. Arrangement according to Claim 2, **characterized in that** the fixed network access points (1, 1', 1") are arranged along rail routes for rail vehicles.

5. Arrangement according to Claim 2, **characterized in that** the fixed network access points (1, 1', 1") are arranged along the bank of a river or canal used for inland navigation.

6. Arrangement according to one of Claims 1 to 5, **characterized in that** the interface (5, 5') for connecting the at least one computer-based terminal to the router device (4), which interface is in the form of part of the subscriber-end access technology, comprises at least one LAN port.

7. Arrangement according to one of Claims 1 to 6, **characterized in that** the interface (5, 5') for connecting the at least one computer-based terminal to the router device (4), which interface is in the form of part of the subscriber-end access technology, comprises at least one socket for connecting a coaxial cable.

8. Arrangement according to one of Claims 1 to 7, **characterized in that** the interface (5, 5') for connecting the at least one computer-based terminal, which interface is in the form of part of the subscriber-end access technology, comprises an antenna, radiating into the stationary or mobile object (7, 7') equipped with the subscriber-end access technology, and also radio transmission and radio reception means for forming a WLAN.

## Revendications

1. Système destiné à la mise à disposition d'accès à large bande pour un réseau étendu, constitué d'au moins un point d'accès au réseau fixe (1, 1', 1") directement relié à large bande par câbles au réseau étendu et d'une technologie d'accès côté abonné pour l'utilisation du réseau étendu au moyen d'au moins un terminal informatique, dans lequel la technologie d'accès côté abonné comprend au moins une antenne (2) comportant des unités d'émission et de réception (3) pour les communications radio avec un point d'accès au réseau fixe (1, 1', 1"), un dispositif routeur (4) et au moins une interface (5, 5') destinée à la connexion radio et/ou par câbles d'au moins ledit terminal informatique au dispositif routeur (4) et qui est intégrée dans l'enveloppe (6, 6') d'un objet fixe (7) ou d'un objet mobile (7') et dans lequel les unités d'émission et de réception (3) et le dispositif routeur (4) de la technologie d'accès côté abonné sont intégrés dans le cadre d'une fenêtre de l'objet (7, 7') et
dans lequel, par ailleurs, l'antenne (2) destinée aux communications radio et munie d'un point d'accès au réseau fixe (1, 1', 1")
a.) est intégrée dans le cadre de ladite fenêtre, qui est dans ce cas constituée d'un matériau non conducteur, ou
b.) est montée sur la surface extérieure d'une vitre de ladite fenêtre ou d'une autre fenêtre de l'objet (7, 7'), ou
c.) est disposée à l'intérieur de la vitre de ladite fenêtre de l'objet (7, 7') réalisée à partir d'un vitrage multiple ou d'une autre fenêtre de l'objet (7, 7') réalisée à partir d'un vitrage multiple.

2. Système selon la revendication 1, **caractérisé en ce que** la technologie d'accès côté abonné est intégrée dans l'enveloppe (6') d'un objet mobile (7') et **en ce que** plusieurs points d'accès au réseau fixes (1, 1', 1") qui sont directement connectés par des câbles au réseau étendu sont disposés dans un corridor de déplacement de l'objet mobile (7'), dans lequel la technologie d'accès côté abonné est transférée d'un point d'accès au réseau (1, 1', 1") au suivant pendant l'utilisation du réseau étendu au moyen dudit au moins un terminal informatique lors du déplacement de l'objet mobile (7') dans le corridor de déplacement conformément au principe du transfert intercellulaire.

3. Système selon la revendication 2, **caractérisé en ce que** les points d'accès au réseau fixes (1, 1', 1") sont réalisés le long de voiries sur des lampadaires (8), sur des pylônes de signalisation routière et/ou sur des portiques.

4. Système selon la revendication 2, **caractérisé en ce que** les points d'accès au réseau fixes (1, 1', 1") sont disposés le long de voies ferrées pour véhicules ferroviaires.

5. Système selon la revendication 2, **caractérisé en ce que** les points d'accès au réseau fixes (1, 1', 1") sont disposés le long de la rive d'une rivière ou d'un canal utilisé pour la navigation intérieure.

6. Système selon l'une des revendications 1 à 5, **caractérisé en ce que** l'interface (5, 5') réalisée sous la forme d'un composant de la technologie d'accès côté abonné pour connecter ledit au moins un terminal informatique au dispositif routeur (4) comprend au moins un port LAN.

7. Système selon l'une des revendications 1 à 6, **caractérisé en ce que** l'interface (5, 5') réalisée sous la forme d'un composant de la technologie d'accès côté abonné pour connecter ledit au moins un terminal informatique au dispositif routeur (4) comprend au moins une fiche pour le raccordement d'un câble coaxial.

8. Système selon l'une des revendications 1 à 7, **caractérisé en ce que** l'interface (5, 5') réalisée sous la forme d'un composant de la technologie d'accès côté abonné pour connecter ledit au moins un terminal informatique comprend une antenne rayonnant dans l'objet fixe ou mobile (7, 7') équipé de la technologie d'accès côté abonné ainsi que des moyens d'émission et de réception radio destinés à réaliser un réseau WLAN.
